# EUROPEAN PATENT SPECIFICATION

(11) **EP 3 007 316 B1**
(45) Date of publication and mention of the grant of the patent: **04.12.2019**
(21) Application number: 15187899.8
(22) Date of filing: 01.10.2015
(51) Int. Cl.: H02J 9/06, H05B 33/08

(54) **EMERGENCY LIGHTING UNIT**
NOTBELEUCHTUNGSEINHEIT
UNITÉ D'ÉCLAIRAGE D'URGENCE

(30) Priority: 06.10.2014 GB 201418035
(43) Date of publication of application: 13.04.2016
(73) Proprietor: Tridonic GmbH & Co KG, 6851 Dornbirn (AT)
(72) Inventor: Dixon, David, Wallsend, Tyne and Wear NE28 9QZ (GB)
(74) Representative: Rupp, Christian

(56) References cited:
- WO-A1-2013/150399
- CN-Y- 2 781 171
- US-A1- 2008 276 509
- US-A1- 2015 349 586

## Description

The present invention relates to a circuit for an emergency lighting device according to the precharacterizing part of claim 1.

Emergency lighting devices are essential for realizing, in larger buildings or complexes, lighting systems that provide adequate lighting even in the event of failure of the building's general power supply. Evacuation or assistance measures can be performed safely only if certain relevant parts or areas of buildings continue to be illuminated in the event of failure of the electric power supply. Accordingly, such emergency lighting devices are used, in particular, for illuminating escape routes and safety devices like extinguishers. Illuminated exit signs identify escape routes and emergency exits.

Emergency lighting devices of the generic type accordingly have an energy storage unit, in particular a battery or accumulator that is charged by the general mains supply voltage in a non-emergency state. For this purpose there is provided a charging circuit that is connected on the input side to the mains supply voltage and, during the charging operation, supplies energy to the energy storage unit, which stores this energy. In the emergency lighting operation, the light source is activated and operated, for which purpose the energy provided by the energy storage unit is used. The emergency state is usually identified automatically by such devices by monitoring of the mains supply voltage for example.

A driving circuitry for driving the light source from the energy storage unit in an emergency state is known from DE 10 2010 028 296 A1.

Since the storage capacity of the energy storage unit is clearly limited, light sources that consume relatively little energy are used preferably. Accordingly, such emergency lighting devices are preferably equipped with gas discharge lamps, in particular fluorescent tubes. Increasingly, however, light sources in the form of light-emitting semiconductors, in particular LEDs, are being used, since these light sources also have high efficiency and, accordingly, can be used in an energy-saving manner. While emergency lighting devices for anti-panic lighting will only be lighted in case of an emergency state, it has been common practice to illuminate exit signs and the like in both the emergency state and the non-emergency state. US 5739639 A discloses an illuminated exit sign in which a LED array is lighted in both the emergency state and the non-emergency state. In US 5739639 A, the LED array is connected in series to the energy storage unit such that the current supplied from a current limited source both charges the battery and always drives the LED array simultaneously. A similar device is disclosed in document US 2008/276509, wherein the LED array is switched in series connection or in parallel connection with the battery according to the operating mode.

Accordingly there are two different types of emergency lighting devices. The first type operates in a maintained mode in which the light source is lighted also in the non-emergency state and the second type operates in a non-maintained mode in which the light source is not lighted in the non-emergency state.

It is an object of the present invention to provide a more versatile emergency lighting device.

Accordingly, the invention proposes an emergency lighting device which can be operated in both the maintained mode and the non-maintained mode as defined above.

These objects are achieved by a circuit and an emergency lighting device according to the enclosed independent claims. Advantageous features of the present invention are defined in the corresponding subclaims.

According to the present invention, the circuit for an emergency lighting device comprises output terminals for driving emergency lighting means, an energy storage unit, input terminals for being supplied with an AC voltage, a driving circuitry for driving the lighting means from the energy storage unit in an emergency state in which the AC voltage fails, wherein in a non-emergency in which the AC voltage is present the circuit is configured to be selectively put in at least the following states:
- a maintained mode in which the circuit feeds a constant current through the lighting means and to the energy storage unit in order to charge the energy storage unit, such that the lighting means are operated during charging of the energy storage unit; and
- a non-maintained mode in which the circuit feeds a constant current to the energy storage unit in order to charge the energy storage unit without feeding the constant current through the lighting means, such that the lighting means are not operated during charging of the energy storage unit.

In order to put the circuit in the non-maintained mode, bypass means can be provided to bypass the lighting means when charging the energy storage unit.

Preferably, the bypass means comprise a bypass switching means for switching off the bypass in order to put the circuit in the maintained mode.

Even if the circuit is built on a printed circuit board (PCB), the bypass switching means can be realized in a simple way with a jumper that is a short length of conductor used to close a break in the bypass. Thus such jumper enables easy configuration of a single circuit to give both opportunities for the modes to the customer.

The bypass means can comprise terminals for connecting an external bypass switching means for switching off the bypass in order to put the circuit in the maintained mode.

In order to prevent a current fed from the emergency lighting driver to flow through the bypass in the emergency state, a diode preferably is provided between the bypass means and the lighting means.

Preferably, the lighting means is an LED array.

The present invention provides an emergency lighting device that can be operated in both the maintained mode and the non-maintained mode.

The invention is to be explained more detailed in the following with reference to the accompanying drawing, wherein:
FIG. 1 shows, in schematic form, a first embodiment of the circuit for an emergency lighting device according to the present invention;
FIG. 2 shows a second embodiment of the circuit for an emergency lighting device according to the present invention; and
FIG. 3 shows an embodiment of an emergency lighting device according to the present invention.

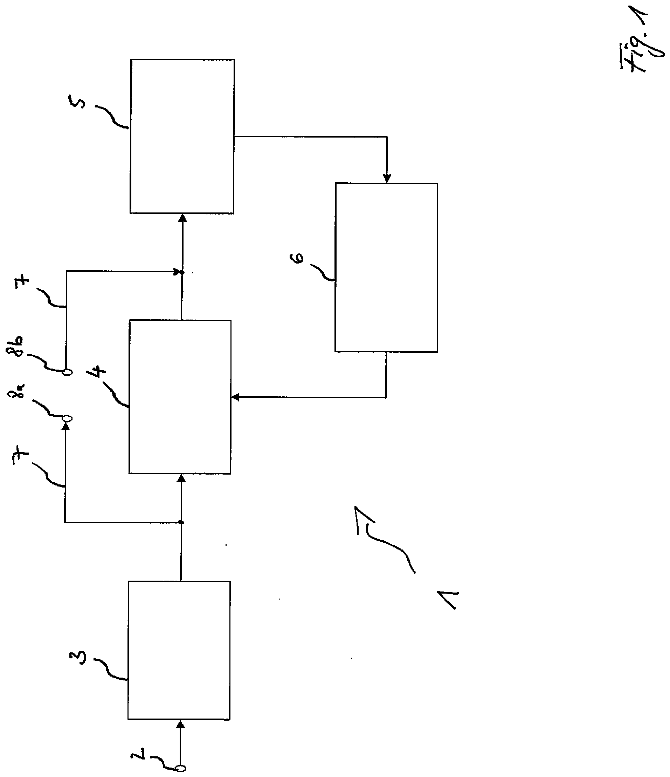

In the first embodiment represented in FIG. 1, the circuit according to the present invention, which is represented in a simplified manner and denoted by the reference 1, is intended for operation of an LED array as a light source.

The circuit 1 shown in Fig. 1 comprises an input terminal 2 for being supplied with an AC voltage, battery charger 3 connected to the input terminals 2, a light source 4 connected to the battery charger 3, an energy storage unit 5 connected to the light source 4, an emergency lighting driver 6 connected to the energy storage unit 5 and a bypass 7 connected in parallel to the light source 4. The bypass 7 comprises terminals 8a, 8b for connecting one or more switching means (not shown) for switching on/off the bypass 7.

The switching means can be a hand switch mounted on the outside of the emergency lighting device and/or can be a remote switch positioned at a control center. Alternatively or in addition, the switching means can be a Light Dependent Resistor (LDR) or photocell, with which, in the non-emergency state, the bypass 7 is switched on/off with increasing/decreasing incident light intensity of the ambient light, and/or the switching means can be a light switch for switching general lighting applications so that the bypass 7 can synchronously or asynchronously be switched with the general lighting applications in the non-emergency state. By using change-over switches and x-switches, in the non-emergency state, the bypass 7 can be switched on and off by each of the switches connected to the terminals 8a, 8b.

All components of the circuit 1, including an LED array as the light source 4 and a battery or an accumulator as energy storage unit 5, can be mounted on a single compact printed circuit board (not shown), wherein the bypass switching means can be realized in a simple way with a jumper.

According to the present invention, in the non-emergency state, the circuit 1 can operate in both the maintained mode, in which the energy storage unit 5 is charged and the light source 4 is lighted, and in the non maintained mode, in which only the energy storage unit 5 is charged.

In the case of the first embodiment according to FIG. 1, when an AC voltage is supplied to the input terminal 2 in the non-emergency state and the bypass 7 is switched off, the battery charger 3 generates a constant current which is fed through the light source 4 to the energy storage unit 5 which is arranged in series with the light source 4. This single current path operates the light source 4 and simultaneously charges the energy storage unit 5, i.e., the circuit 1 operates in the maintained mode.

When the circuit 1 operates in the non-maintained mode, the bypass 7 is switched on and the constant current generated by the battery charger 3 is fed through the bypass 7 instead of the light source 4 to the energy storage unit 5, so that the light source 4 is not operated/lighted and only the energy storage unit 5 is charged by the constant current. Since the bypass 7 is switched on, the light source 4 will be only lighted in case of an emergency state, in which the emergency lighting driver 6 drives the light source 4 out of the energy storage unit 5.

Depending on requirements, there can be different charge cycles, namely initialization charge, power charge and trickle charge. With the present invention, the circuit 1 can be operated in the non-maintained mode for initialization and/or power charge so that the energy storage unit 5 can be changed with a higher current bypassed to the energy storage unit 5, and can be manually or automatically switched from the non-maintained mode to the maintained mode when the initialization or power charge is completed and the trickle charge is started. The charge cycles can be controlled or detected by a charge controller (not show) which controls the switching means to switch between the non-maintained mode and the maintained mode based on the charge cycle.

According to the present invention, in the emergency state, an AC voltage shown in Fig. 1 is not supplied to the input terminal 2 and the battery charger 3 does not generate a constant current which is fed through the light source 4 to the energy storage unit 5 or through the bypass 7 to the energy storage unit 5. If the emergency state is detected by the emergency lighting driver 6 based on loss of AC voltage, loss of constant current/charging voltage, or an external control signal (not shown), the emergency lighting driver 6 drives the light source 4 from the energy storage unit 5 with a constant power or constant current irrespective of the state of charge of the energy storage unit 5. This measure is of particular importance, since the power of the energy storage unit 5 clearly declines over time, which, however, should not affect the light intensity of the light source 4 during the emergency lighting operation.

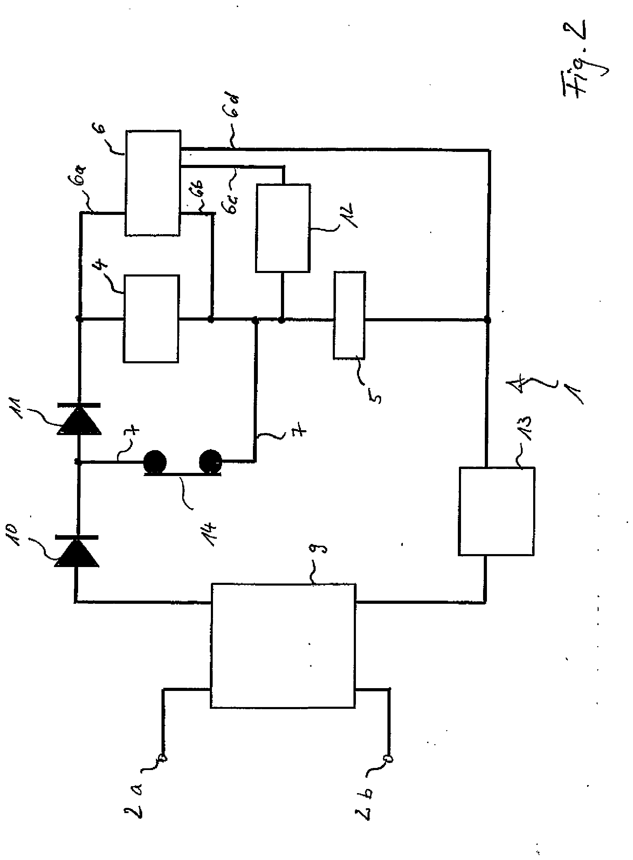

FIG. 2 shows a second embodiment of the circuit for an emergency lighting device according to the present invention. The circuit 1 shown in Fig. 2 comprises the input terminal 2 for being supplied with an AC voltage, AC/DC converter 9 connected to the input terminals 2 and a constant current control/regulator 13 connected to the AC/DC converter 9 to adjust/limit the DC current supplied form the AC/DC converter 9 to provide a constant current. The bypass 7 shown in Fig. 2 comprises a switching means 14 for switching on/off the bypass 7.

In the case of the second embodiment according to FIG. 2, when an AC voltage is supplied to the input terminal 2 in the non-emergency state and the bypass 7 is switched off by the switching means 14, the circuit operates in the maintained mode in which the constant current is fed through a first diode 10, a second diode 11, the light source 4 and the energy storage unit 5 so that the light source 4 is lighted and the energy storage unit 5 is charged.

In the non-maintained mode, the bypass 7 shown in Fig. 2 is switched on by the switching means 14, the constant current is fed through the first diode 10, the bypass 7 and the energy storage unit 5, so that the light source 4 is not lighted and the energy storage unit 5 is charged in the non-emergency state. In a simple and cheap to manufacture system the switching means 14 is a jumper.

In the emergency state when an AC voltage is not supplied to the input terminal 2 shown in Fig. 2, the energy storage unit 5 is not charged which is detected by or reported to the emergency lighting driver 6 the operation of which is controlled by a battery control means 12. In this case, the emergency lighting driver 6 connected to the light source 4 by lines 6a and 6b drives the light source 4 with electric power out of the energy storage unit 5 to which the emergency lighting driver 6 is connected. The battery control means 12 is configured to control operation of the emergency lighting driver 6 but also to perform self testing and check battery status.

The particular arrangement of the first diode 10, the second diode 11 and the switching means 14 as explained can be implemented in the first embodiment also, of course.

With the diodes 11 and 10, the current fed from the emergency lighting driver 6 via the line 6a in case of emergency operation is prevented to flow through the bypass 7 and a current fed from the energy storage unit 5 is prevented to flow through the bypass 7, the AC/DC converter 9 and the constant current control 13, respectively. It is evident that the diodes 10 and 11 are only given as examples and can be representative for parts of a diode network.

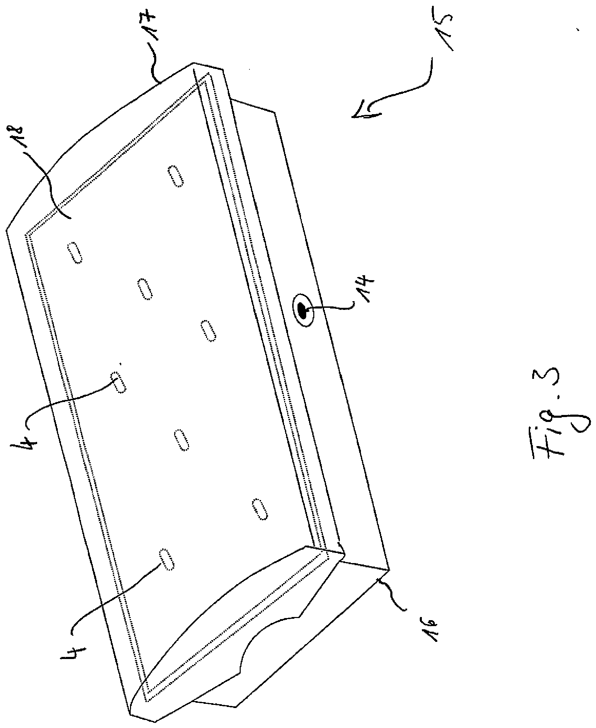

FIG. 3 shows an embodiment of the emergency lighting device according to the present invention. The emergency lighting device 15 comprises a housing 16, a transparent front cover plate 17, a printed circuit board 18 (dotted lines) and the switching means 14 for switching on/off the bypass 7 (not shown). The printed circuit board 18 includes the light source 4 (dotted lines) as an LED array. The circuit comprising the energy storage unit 5, the input terminals 2 or 2a, 2b and the driving circuit 6 can be built on the printed circuit board 18 or can be built on another printed circuit board having output terminals for driving the light source 4 shown in Fig. 3.

The transparent front cover plate 17 can be equipped with a stencil having the letters "EXIT" or an exit sign in the major surface thereof and a colored diffuser (not shown).

With the switching means 14 shown in Fig. 4, which can be the hand switch or the photocell as described above, the operation mode (maintained or non-maintained mode) in the non-emergency state can be selected/controlled.

## Claims

1. Circuit for an emergency lighting device, comprising:
- output terminals for driving emergency lighting means (4),
- a storage unit (5) for electric energy, such as a battery,
- input terminals (2; 2a, 2b) for being supplied with an AC voltage,
- a driving circuitry (6) for driving the emergency lighting means (4), when connected to the output terminals, from the energy storage unit (5) in an emergency state in which the AC voltage fails,
and an AC/DC converter (9) connected to the input terminals (2a, 2b), **characterized in that** the circuit comprises a constant current control/regulator (13) connected to the AC/DC converter (9), and **in that** in a non-emergency in which the AC voltage is present the circuit (1) is configured to be selectively put in at least the following states:
- a maintained mode in which the constant current control/regulator (13) feeds a constant current through the emergency lighting means (4), when connected to the output terminals, and to the energy storage unit (5) in order to charge the energy storage unit (5), such that the emergency lighting means (4) are operated during charging of the energy storage unit (5); and
- a non-maintained mode in which the constant current control/regulator (13) feeds a constant current to the energy storage unit (5) in order to charge the energy storage unit (5) without feeding the constant current through the emergency lighting means (4) such that the emergency lighting means (4) are not operated during charging of the energy storage unit (5) .

2. Circuit according to claim 1, wherein bypass means (7) are provided to bypass the emergency lighting means (4) when charging the energy storage unit (5), in order to put the circuit (1) in the non-maintained mode.

3. Circuit according to claim 2, wherein the bypass means (7) comprise a bypass switching means (14) for switching off the bypass in order to put the circuit (1) in the maintained mode.

4. Circuit according to claim 3, wherein the bypass switching means (14) is a jumper.

5. Circuit according to claim 2, 3 or 4, wherein the bypass means (7) comprise terminals (8a, 8b) for connecting an external bypass switching means for switching off the bypass in order to put the circuit in the maintained mode.

6. Circuit according to any one of claims 2 to 5, wherein a diode (11) is provided between the bypass means (7) and the lighting means (4) to prevent current fed by the emergency lighting driver (6) from the energy storage unit to flow through the bypass (7) in an emergency.

7. Circuit according to any one of claims 1 to 6, wherein the lighting means (4) is a LED array.

8. Emergency lighting device comprising the circuit according to any one of claims 1 to 7.

## Patentansprüche

1. Schaltkreis für eine Notbeleuchtungsvorrichtung, Folgendes umfassend:
- Ausgangsanschlüsse zum Antreiben von Notbeleuchtungsmitteln (4),
- eine Speichereinheit (5) für elektrische Energie, wie beispielsweise eine Batterie,
- Eingangsanschlüsse (2, 2a, 2b) für die Versorgung mit einer Wechselspannung,
- eine Treiberschaltung (6), um die Notbeleuchtungsmittel (4), wenn diese mit den Ausgangsanschlüssen verbunden sind, in einem Notfallbeleuchtungszustand, in dem die Wechselspannung ausfällt, von der Energiespeichereinheit (5) aus anzutreiben, und
einen Wechselstrom-Gleichstrom-Wandler (9), der mit den Eingangsanschlüssen (2a, 2b) verbunden ist,
**dadurch gekennzeichnet, dass** der Schaltkreis eine Konstantstromsteuerung/-regelung (13) umfasst, die mit dem Wechselstrom-Gleichstrom-Wandler (9) verbunden ist, und dadurch, dass der Schaltkreis dafür konfiguriert ist, in einem Nicht-Notfall, bei dem die Wechselspannung anliegt, wahlweise in einen der folgenden Zustände versetzt zu werden:
- einen Aufrechterhaltungsmodus, in dem die Konstantstromsteuerung/- regelung (13) einen konstanten Strom durch die Notbeleuchtungsmittel (4) führt, wenn diese mit den Ausgangsanschlüssen verbunden sind, und zu der Energiespeichereinheit (5), um die Energiespeichereinheit (5) zu laden, so dass die Notbeleuchtungsmittel (4) während des Ladens der Energiespeichereinheit (5) betrieben werden, und
- einen Nicht-Aufrechterhaltungsmodus, in dem die Konstantstromsteuerung/- regelung (13) einen konstanten Strom zu der Energiespeichereinheit (5) führt, um die Energiespeichereinheit (5) zu laden, ohne den konstanten Strom durch die Notbeleuchtungsmittel (4) zu führen, so dass die Notbeleuchtungsmittel (4) während des Ladens der Energiespeichereinheit (5) nicht betrieben werden.

2. Schaltkreis nach Anspruch 1, wobei Umgehungsmittel (7) bereitgestellt sind, um die Notbeleuchtungsmittel (4) zu umgehen, wenn die Energiespeichereinheit (5) geladen wird, um den Schaltkreis (1) in den Nicht-Aufrechterhaltungsmodus zu versetzen.

3. Schaltkreis nach Anspruch 2, wobei die Umgehungsmittel (7) ein Umgehungsschaltmittel (14) zum Abschalten der Umgehung umfassen, um den Schaltkreis (1) in den Aufrechterhaltungsmodus zu versetzen.

4. Schaltkreis nach Anspruch 3, wobei das Umgehungsschaltmittel (14) eine Brücke ist.

5. Schaltkreis nach Anspruch 2, 3 oder 4, wobei die Umgehungsmittel (7) Anschlüsse (8a, 8b) zum Verbinden eines externen Umgehungsschaltmittels zum Abschalten der Umgehung umfassen, um den Schaltkreis in den Aufrechterhaltungsmodus zu versetzen.

6. Schaltkreis nach einem der Ansprüche 2 bis 5, wobei zwischen den Umgehungsmitteln (7) und den Beleuchtungsmitteln (4) eine Diode (11) bereitgestellt ist, um zu verhindern, dass Strom, der von dem Notbeleuchtungstreiber (6) von der Energiespeichereinheit aus zugeführt wird, in einem Notfall durch die Umgehung (7) fließt.

7. Schaltkreis nach einem der Ansprüche 1 bis 6, wobei das Beleuchtungsmittel (4) eine LED-Anordnung ist.

8. Notbeleuchtungsvorrichtung, den Schaltkreis nach einem der Ansprüche 1 bis 7 umfassend.

## Revendications

1. Circuit pour un dispositif d'éclairage d'urgence, comprenant :
- des bornes de sortie pour commander des moyens d'éclairage d'urgence (4),
- une unité de stockage (5) pour une énergie électrique, telle qu'une batterie,
- des bornes d'entrée (2 ; 2a, 2b) pour recevoir une tension alternative,
- des éléments de circuit de commande (6) pour commander les moyens d'éclairage d'urgence (4), lorsqu'ils sont connectés aux bornes de sortie, à partir de l'unité de stockage d'énergie (5) dans un état d'urgence dans lequel la tension alternative est défaillante, et
- un convertisseur alternatif/continu (9) connecté aux bornes d'entrée (2a, 2b) **caractérisé en ce que** le circuit comprend un régulateur/commande de courant constant (13) connecté au convertisseur alternatif/continu (9), et **en ce que**, dans un état de non-urgence dans lequel la tension alternative est présente, le circuit (1) est configuré pour être mis de manière sélective au moins dans les états suivants :
- un mode maintenu dans lequel le régulateur/commande de courant constant (13) fourni un courant constant à travers les moyens d'éclairage d'urgence (4), lorsqu'ils sont connectés aux bornes de sortie, et à l'unité de stockage d'énergie (5) afin de charger l'unité de stockage d'énergie (5), de sorte que les moyens d'éclairage d'urgence (4) soient mis en œuvre pendant la charge de l'unité de stockage d'énergie (5) ; et
- un mode non maintenu dans lequel le régulateur/commande de courant constant (13) fourni un courant constant à l'unité de stockage d'énergie (5) afin de charger l'unité de stockage d'énergie (5) sans fournir le courant constant à travers les moyens d'éclairage d'urgence (4) de sorte que les moyens d'éclairage d'urgence (4) ne soient pas mis en œuvre pendant la charge de l'unité de stockage d'énergie (5).

2. Circuit selon la revendication 1, dans lequel des moyens de dérivation (7) sont prévus pour contourner les moyens d'éclairage d'urgence (4) lors de la charge de l'unité de stockage d'énergie (5), afin de mettre le circuit (1) dans le mode non maintenu.

3. Circuit selon la revendication 2, dans lequel les moyens de dérivation (7) comprennent des moyens de commutation de dérivation (14) pour retirer la dérivation afin de mettre le circuit (1) dans le mode maintenu.

4. Circuit selon la revendication 3, dans lequel les moyens de commutation de dérivation (14) sont un cavalier.

5. Circuit selon la revendication 2, 3 ou 4, dans lequel les moyens de dérivation (7) comprennent des bornes (8a, 8b) pour connecter des moyens de commutation de dérivation externes pour retirer la dérivation afin de mettre le circuit dans le mode maintenu.

6. Circuit selon l'une quelconque des revendications 2 à 5, dans lequel une diode (11) est prévue entre les moyens de dérivation (7) et les moyens d'éclairage (4) pour empêcher le courant fourni par le dispositif de commande d'éclairage d'urgence (6) à partir de l'unité de stockage d'énergie de circuler à travers la dérivation (7) en cas d'urgence.

7. Circuit selon l'une quelconque des revendications 1 à 6, dans lequel les moyens d'éclairage (4) sont un réseau de DEL.

8. Dispositif d'éclairage d'urgence comprenant le circuit selon l'une quelconque des revendications 1 à 7.
